# EUROPÄISCHE PATENTSCHRIFT

(11) **EP 0 472 129 B1**
(45) Veröffentlichungstag und Bekanntmachung des Hinweises auf die Patenterteilung: **30.07.1997**
(21) Anmeldenummer: 91113799.0
(22) Anmeldetag: 16.08.1991
(51) Int. Cl.: A01B 33/06

(54) **Bodenbearbeitungsmaschine**
Soil cultivating machine
Machine pour travailler la terre

(30) Priorität: 18.08.1990 DE 4026203; 23.07.1991 DE 4124330
(43) Veröffentlichungstag der Anmeldung: 26.02.1992
(73) Patentinhaber: Hofmann, Hans, D-89233 Neu-Ulm (DE)
(72) Erfinder: Volz, Otto, W-8870 Günzburg (DE); Hofmann, Hans, W-7910 Neu-Ulm Schwaighofen (DE)

(56) Entgegenhaltungen:
- DE-A- 1 813 079
- DE-U- 8 309 454
- FR-A- 1 315 237
- FR-A- 1 386 256
- GB-A- 958 223
- GB-A- 1 032 663
- US-A- 3 129 772
- US-A- 4 090 571

## Beschreibung

Die Erfindung betrifft eine Bodenbearbeitungsmaschine, insbesondere Hack- und Jätmaschine nach Anspruch 1.

Aus der US-A-3 129 772 ist eine motorgetriebene Einachs-Hack- und Jätmaschine mit einem Arbeitswerkzeug bekannt, bei dem der Innenwinkel zwischen dem oberen und dem umgebogenen unteren Schenkel 90° beträgt und sich in einer Ebene mit dem unteren Schenkel befindet, welcher an seiner voreilenden Kante mit einer radial ausgerichteten Schneide versehen ist. Der obere Schenkel ist zur Vermeidung eines Zustreichens des Bodens in einer einen Freiwinkel abgebenden Weise um seine vertikale Mittellinie verschränkt. Die Schneiden üben im Umlauf des Kreisels einen parallelen schlagartigen Hackschnitt aus, welcher sie stark beansprucht und einen großen Kraftaufwand erfordert. Auch werden die so angeordneten Schneiden beim Auftreffen auf Steine leicht beschädigt und zumindest schnell stumpf, sodaß das Wurzelwerk nicht mehr geschnitten werden kann, sondern zurückgleitet und auch die Erde nicht mehr in der gewünschten Weise fein zerkrümelt wird. Durch den gerade auf die Pflanzen bzw. Wurzeln auftreffenden Hackschnitt werden weiterhin abgeschnittene bzw. mitgerissene Pflanzen- und Wurzelteile mitgeschleppt und können ein den Leistungsbedarf und Verschleiß erhöhendes Verstopfen verursachen, zumindest jedoch die Schneidleistung weiter erheblich verschlechtern.

Aus der DE-U-8 309 454 ist eine Bodenbearbeitunngsmaschine mit an vertikalen Wellen angeordneten, fremdangetriebenen Kreisel bekannt. Die Arbeitswerkzeuge derselben bestehen aus einem oberen sich nach unten erstreckenden und einem daran nach dem Kreiselinnern ausgerichteten unteren Schenkel. Um die Maschine beim Auftreffen eines schrägen Werzeugabschnitts auf feste Hindernisse anzuheben, soll die gesamte Kraft auf die Werkzeuge relativ klein sein und dennoch die zum Anheben nötige Vertikalkraft entstehen. Dieses wird bei der Raumform durch schräge Werkzeugabschnitte an den voreilenden Kanten der Schenkel und offenbar auch durch Verringerung des Reibungswiderstands durch bevorzugte Zinken aus schmalem Flachmaterial oder solchen, welche an ihren voreilenden Kanten schneidenförmig zugeschärft sind, erreicht. Eine Anwendung zum Hacken und Jäten ist mit der Vorrichtung nicht möglich, da die Maschine verhältnismäßig oft angehoben würde.

Aus der DE-A 1 813 079 ist eine Reihenhackmaschine mit senkrecht angeordneten pflugartig gekrümmten, über die gesamte Kreiselfläche verteilten Messern bekannt, deren voreilende Schneidkanten abgeschrägt sind. Dabei werden die Pflanzen und Wurzeln lediglich senkrecht durchtrennt. An den abgeschrägten Schneidkanten sollen Steine oder schwer zerschneidbare Pflanzenteile abgeleitet werden, wodurch jedoch die Maschine angehoben werden kann und gerade die starken Unkräuter, insbesondere Wurzeln, verschont bleiben und die Nutzpflanzen durch die angehobenen Kreisel beschädigt werden können. Ferner kann man mit den pflugförmig die Erde nach der Kreiselmitte fördernden Messern die zwischen einer Pflanzenreihe befindlichen Unkrautpflanzen nicht mit Erde abdecken. Durch die nach dem Kreiselinnern geförderte Erde und ausgejäteten Pflanzenteile können durch dort in Gegenrichtung fördernde innere Messer leicht Verstopfungen und durch die hierbei resultierende Schwergängigkeit der Maschine Beschädigungen verursacht werden. Der Umlaufkreis der Messer kann durch Aufstecken einer äußeren Kreiselplatte mit Messern vergrößert werden, wodurch jedoch bei dieser Ausführungsart die Gefahr einer Verstopfung weiter erhöht wird.

Aus der US-A 4 090 571 ist desweiteren eine Bodenbearbeitungsmaschine mit kreiselnden Hackwerkzeugen bekannt. Diese sind frei drehbar an Schäften gelagert, die ihrerseits mit starr an Querträgern der Maschine verschiebbar angeordneten Klammerschrauben befestigt sind. Die Schäfte von je zwei Kreiseln sind quer zur Fahrtrichtung so schräg nach außen ausgerichtet, daß die verlängert gedachten Drehachsen des Kreiselpaares einen spitzen Winkel einschließen und die Arbeitswerkzeuge der nebeneinander umlaufenden Kreisel innen tiefer als außen in den Boden eindringen und so im Vorschub durch den Boden angetrieben werden. Die Arbeitswerkzeuge bestehen aus vier Zinken, die unten flache nach außen in einer Ebene abgewinkelte Schneiden aufweisen. Zwischen diesen und den Zinken erstreckt sich eine dreieckige, dem Antrieb dienende, Schaufel. Diese ragt an der weniger tief in den Boden eindringenden Seite über die Bodenlinie hinaus, sodaß die von den Fräswerkzeugen vom Ackerboden abgerissenen Bissen und Stoppelteile nach der Seite geworfen werden. Das Ablösen der Bissen vom Ackerboden ist dabei ein Spalt bzw. Sprengvorgang mit zerreißender, staubildender Wirkung mit schweren bodentechnologischen Nachteilen. Nahe an Pflanzenreihen kann mit der Maschine im Hinblick auf die außenliegenden Messer nicht gearbeitet werden.

Ferner ist aus der GB-A-1 032 663 eine bodenangetriebene Hackmaschine bekannt, mit welcher der Boden rund um die Stämme von Büschen oder Bäumen aufgelockert werden soll. Die Arbeitswerkzeuge bestehen hierbei aus 12 tangential von einer Nabe horizontal abstehenden Armen. Diese sind im weiteren Verlauf an den voreilenden Kanten als mit Schneiden versehene, mit einem kurzen schräg nach außen und unten verlaufenden Übergang, zu horizontalen Messern ausgebildet. Durch die stumpfen rückwärtigen Kanten der Messer sollen die Kreisel beim Vorschub angetrieben werden. Da sich die oberen Arme dabei oberhalb der Bodenlinie bewegen müssen, können die abgeschrägten Teile der Messer kaum etwas zur Hack- und Jätarbeit beitragen. Es erfolgt somit ein horizontaler Schnitt. Eine in die Tiefe gehende Bodenzerkrümelung und ein Jäteffekt dürfte hierbei nicht erzielbar sein. Außerdem dürfte der Schubeffekt, den der Bodenwiderstand auf die Messerrücken ausübt, bei schweren Böden und starken Wurzeln bei weitem nicht zum Bodenantrieb ausreichen.

In der FR-A 1 315 237 ist ein Gerät zur Bodenlockerung bechrieben, bei welchem die Arbeitswerkzeuge aus an einer Kreiselscheibe angeordneten sichelförmig nach außen geformten Zinken bestehen. Die voreilenden verhältnismäßig breiten Kanten derselben sind bei einer ersten Ausführung derselben mit einer konkaven Einwölbung versehen, bei einer zweiten so abgeschrägt, daß die Erde nach der Kreiselmitte und bei einer dritten nach ihrer Mitte gelenkt wird, was mit einem hohen Leistungsbedarf verbunden ist. Infolge der Auswölbung der Zinken kann der Boden hiermit nicht in zylindrischen Flächen und somit nicht ganzflächig bis in die Tiefe bearbeitet werden.

Die Aufgabe der Erfindung besteht darin, eine universell einsetzbare und einen geringen Leistungsbedarf erfordernde, leichtzügige und daher insbesondere auch zum Bodenantrieb der Arbeitswerkzeuge geeignete bzw. größere Arbeitsbreiten ermöglichende oder auch mehr Kreiseln zulassende Maschine zu schaffen, bei welcher mit den Arbeitswerkzeugen eine optimale und verstopfungsfreie Schnitt- und Jätarbeit und auch eine feine Bodenzerkrümelung und -vermischung mit Erfassung aller in der Tiefe zu bearbeitenden Bodenschichten erzielbar ist.

Diese Aufgabe wird durch die Merkmale des Anspruchs 1 gelöst.

Die durch die Erfindung erreichten Vorteile bestehen neben den sich aus der Zeichnungsbeschreibung ergebenden in folgendem:
- Durch die Ausbildung der Arbeitswerkzeuge gemäß den Merkmalen des Anspruchs 1 werden die Wurzeln der Unkrautpflanzen im wesentlichen vertikal und horizontal mit gleitenden, ziehenden Schnitten zerkleinert, wodurch
- die Maschine leichtzügiger arbeitet, was den Leistungsbedarf verringert und die Standzeit der Arbeitswerkzeuge wesentlich erhöht,
- ein Bodenantrieb der Kreisel erleichtert wird, was eine einfache Vergrößerung der Umlaufkreise der Arbeitswerkzeuge bzw. eine größere Kreiselanzahl zuläßt;
- Hindernisse wie Steine bei einer gegebenen Einstellung der Arbeitswerkzeuge ohne Anheben der Maschine abgewiesen werden;
- bei Innenwinkeln der unteren Schenkel von z.B. 55° zu den oberen ein bisher unerreichter Jäteffekt erzielbar ist und
- je nach Anstellung und Ausrichtung der Arbeitswerkzeuge in dem vorgegebenen Rahmen in vorteilhafter Weise auch eine seitliche Anhäufelung des Bodens erreicht werden kann;
- Desweiteren ist ein Selbstschärfeffekt durch den ziehenden Schnitt zu erzielen.

### Zeichnungsbeschreibung

Im folgenden wird die Erfindung anhand einiger Ausführungsbeispiele erläutert und beschrieben:
Es zeigen
Figur 1 ein erfindungsgemässes Arbeitswerkzeug (Messer) zum Anschluß an Werkzeughalter;
Figur 2 eine Draufsicht auf eine bodenangetriebene Hack- und Jätmaschine;
Figur 3 eine Seitenansicht der Maschine gemaß Fig.2 mit der Einzelheit eines Halters des Arbeitswerkzeuges (Messerhalter) und eines annähernd U-förmig ausgebildeten Arbeitswerkzeuges in schematischer Darstellung;
Figur 4 eine Seitenansicht einer Maschine mit einer anderen Antriebsart;
Figur 5 die Maschine gemäß Fig. 4 in Draufsicht;
Figur 6 eine schematische Darstellung der Arbeitsweise vereinfacht gezeichneter Arbeitswerkzeuge als Hack- und Jätmaschine.

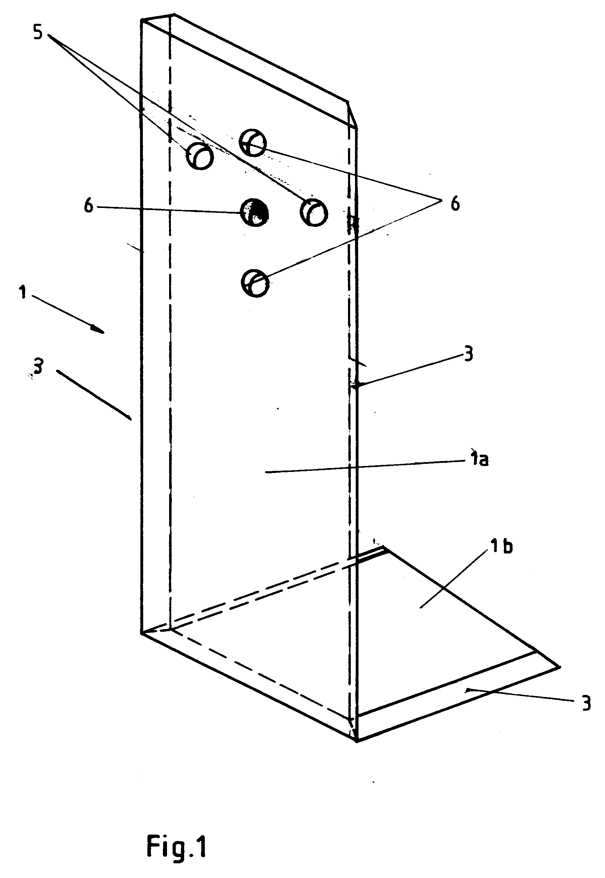

In der Zeichnung ist in Figur 1 ein annähernd L-förmiges Arbeitswerkzeug gezeigt. Mit 1a ist hier ein sich nach unten erstreckender erster, oberer Schenkel, mit 1b ein sich nach dem Kreiselinnern erstreckender zweiter, unterer Schenkel und mit 3 sind deren Schneiden bezeichnet.

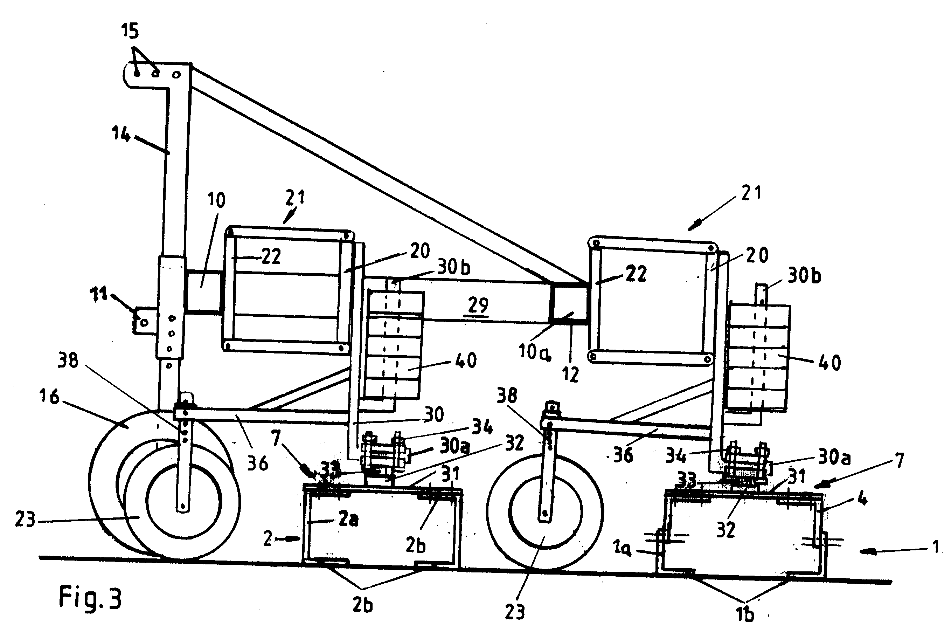

Zur Erzielung eines ziehenden Schnittes mit diesen L- förmigen Messern 1 gemäß Figur 1 wird die Anstellung des oberen Schenkels 1a, durch Verschraubung mit in Figur 3 (rechte Seite) ersichtlichen Messerhaltern 4 an seitlich zur Mittellinie des oberen Schenkels versetzt angeordneten Schraubenlöchern 5 und mittleren Schraubenlöchern 6 erreicht. Der zweite untere Schenkel 1b ist dabei so angeordnet, daß er mit seiner gedachten Verlängerung im Abstand von der Kreiselachse verläuft. Damit tangiert die gedachte Verlängerung der Schneide 3 des unteren Schenkels 1b eine die Kreiselachse umgebende zylinderförmige Zone, wodurch sich auch hier ein ziehender Schnitt ergibt.

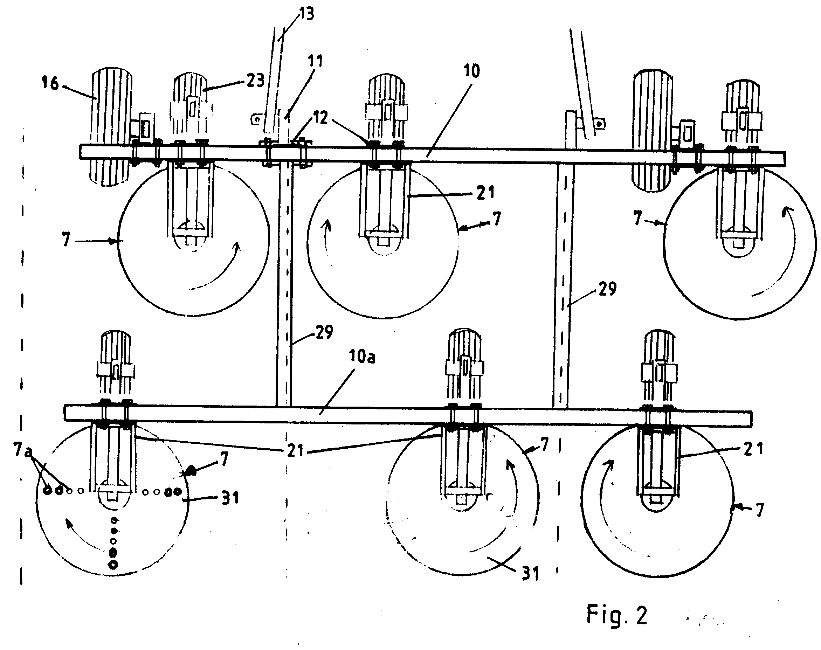

In den Figuren 2 und 3 ist der Einsatz der Arbeitswerkzeuge bei durch die Kreisel 7 bodenangetriebenen Hack- und Jätmaschinen veranschaulicht. Der Rahmen der Maschine besteht aus Querträgern 10 bzw. 10a welche durch Holme 29 miteinander verbunden sind. An dem außen mit höhenverstellbaren Stützrädern 16 versehenen Querträger 10 sind Unterlenkeranschlüsse 11 mit Klammerschrauben 12 angeordnet. Der Unterlenker ist mit 13 bezeichnet. Mit diesem und dem übrigen Anbaubbock -Figuren 2 bis 4- sind die Maschinen an die Dreipunkthydraulik eines Schleppers anschließbar. Mittels der Anschlußaugen 15 ist die Länge des Oberlenkers14 und damit die Neigung der Maschine und der Kreisel 7 mit den Arbeitswerkzeugen 1,2 in Fahrtrichtung verstellbar.

Die Kreisel 7 sind -wie in Figur 3 zu sehen- mit einem Drehlager 32 an Achsstummeln 33 von Rohrschellen 34 gelagert. Letztere sind an horizontal abgekröpften Zapfen 30a von Tragarmen 30 quer zur Fahrtrichtung verdreh- und feststellbar befestigt. Dadurch sind die Kreisel zwecks Bodenantrieb und zu sonstigen Bearbeitungszwecken mit ihrer Drehachse stufenlos in Schräglagen quer zur Arbeitsrichtung, bei welcher die Messer 1,2 an einer Seite tiefer als an der anderen in den Boden eindringen, einstellbar. Die Tragarme 30 sind an Schwingen 20 von, Traggestelle 21 bildenden, eine Bodenanpassung der Kreisel 7 ermöglichenden Gelenkvierecken angebracht. Mit ihrer Basis 22 sind diese andererseits mittels Klammerschrauben 12 -Fig. 3-in quer zur Fahrtrichtung verschiebbarer Weise an den Querträgern 10 und 10a angeordnet. Die Einstellung der Arbeitstiefe der Messer insgesamt wird durch den Kreiseln 7 in Fahrtrichtung vorgelagerte, an einer Lochreihe 38 höhenverstellbare Stützräder 23 ermöglicht, die an mit den Tragarmen 30 verbundenen Auslegern 36 gelagert sind und sich frei pendelnd der Bodenlinie anpassen. Wie in Figur 2 veranschaulicht, sind an beiden Querträgern 10 und 10a die Traggestelle 21 mit den Kreiseln 7 so angeordnet, daß abwechselnd die inneren und die äußeren jeweils eine Pflanzenreihe bearbeiten. An einem weiter von dem Tragarm abgewinkelten Träger 30b sind oberhalb der Kreisel 7 ringförmige Gewichte 40 aufgereiht, welche die Kreisel in ihrer Arbeitslage halten (vgl. Fig.3)

Wie in den Figuren 2 und 3 zu sehen, ist zum Anschrauben der Messerhalter 4 (gemäß Fig. 3 rechts) oder bei U-förmig ausgebildeten Werkzeugen 2 (gemäß Figur 3 links) an einer Kreiselscheibe 31 eine Reihe Anschlußlöcher 7a (fig. 2 links) vorgesehen, an denen diese nach innen bzw. nach außen versetzbar sind, sodaß der Durchmesser des Umlaufkreises der Arbeitswerkzeuge 1,2 veränderbar ist, was hier ohne weiteres durch die Leichtzügigkeit des ziehenden Schnittes möglich ist. Man kann so z.B. bei weniger großen Abständen der Pflanzenreihen voneinander zwei gegenüberliegende Pflanzenreihen mit einem einzigen Kreisel 7 durch Verbreiterung des Umlaufkreises der Arbeitswerkzeuge 1,2 bearbeiten, insgesamt also mehr Reihen mit derselben Maschine.

Die in Figur 3 (links)schematisch gezeigten annähernd U-förmigen Arbeitswerkzeuge 2 sind so ausgebildet, daß in eingebautem Zustand der nach unten verlaufende, erste, obere Schenkel 2a zu der Drehscheibe 31 und damit zu der senkrechten durch die Kreiselachse verlaufenden Ebene in Schneidrichtung schräg angestellt ist. Der zweite, untere, freiendende Schenkel 2b verläuft so, daß seine gedachte Verlängerung die Drehachse des Kreisels nicht schneidet.

Er bildet damit an seiner Verbindung mit dem oberen Schenkel 2a mit der durch die Kreiselachse gehenden Radialen einen Winkel. Durch diese Ausbildung wird ein ziehender Schnitt an dem ersten oberen Schenkel 2a und dem zweiten, unteren Schenkel 2b erreicht. Bei der U-förmigen Ausbildung kann das Arbeitswerkzeug in umgedrehter Richtung angeordnet werden, d.h. es kann einer der beiden freiendenden Schenkel 2b als Befestigungsschenkel dienen.

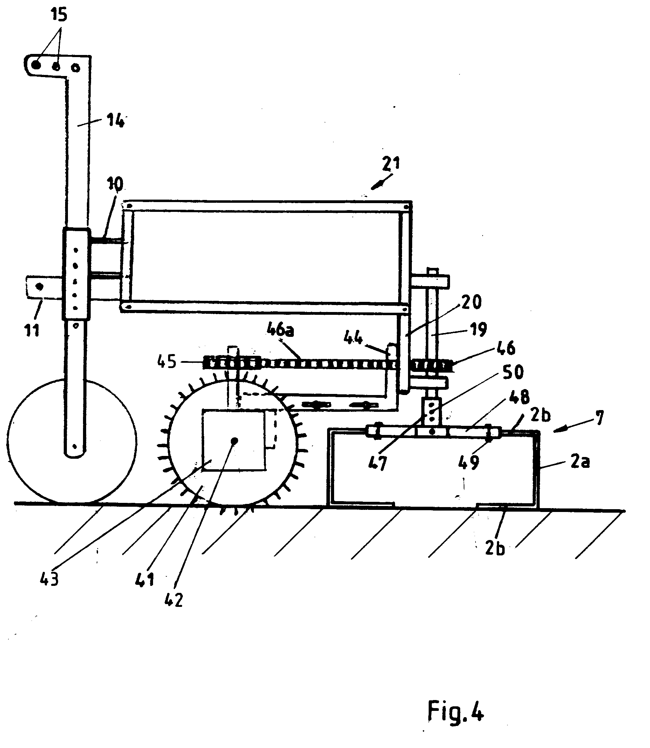

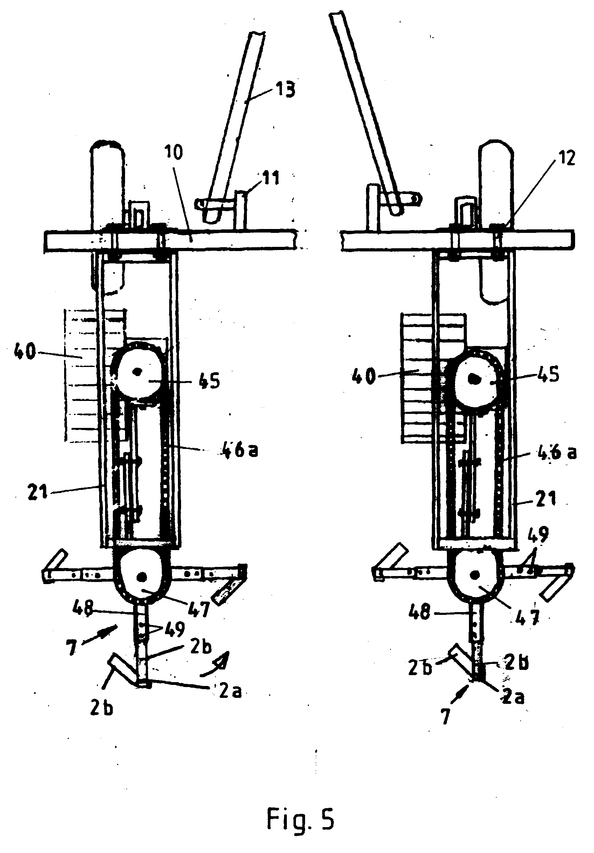

Bei der Ausführungsart gemäß den Figuren 4 und 5 sind die Kreisel 7 durch Bodenantriebsräder 41 angetrieben. Die Welle 42 ist die Antriebswelle eines Winkelgetriebes 43. Mit letzterem sind die Bodenantriebsräder 41 an Auslegern 44 der Traggestelle 21 angeschlossen. Das Antriebsrad 45 des Winkelgetriebes 43 treibt über eine Kette 46a ein Antriebsrad 46 einer ebenfalls an dem Traggestell 21 gelagerten Welle 19 mit dem Kreisel 7 an. Letzterer besteht, wie aus Figur 5 zu ersehen, aus sternförmigen, an einer Nabe 47 angeordneten Vierkantrohren 48, in welche ein Schenkel 2b des U-förmig ausgebildeten Messers 2 teleskopartig in verschiedene Stellungen einschieb- und durch Schrauben 49 feststellbar ist. Die Nabe 47 ist, wie in Figur 4 zu sehen, mit einer Lochreihe 50 zur Tiefeneinstellung der Kreisel 7 versehen.

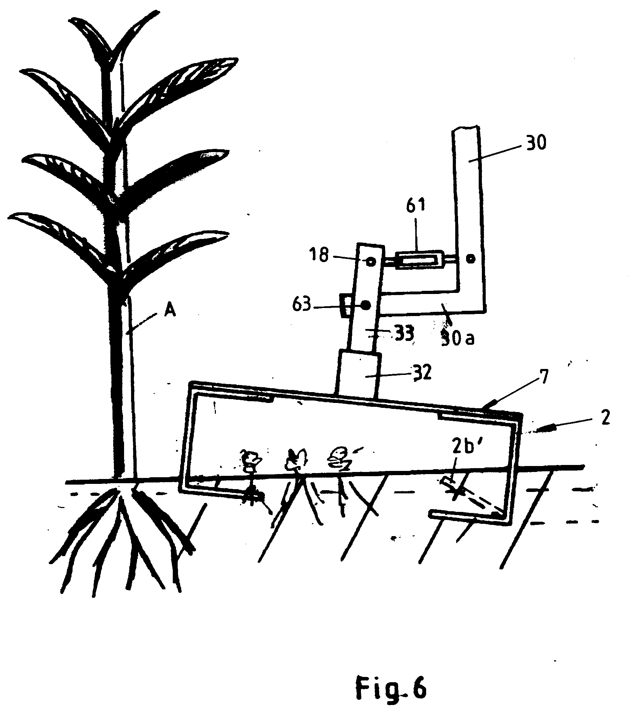

In Figur 6 ist eine weitere Vorrichtung zur Queranstellung der Kreisel 7 angedeutet. Hier ist der Achsstummel 33 des Drehlagers 32 des Kreisels 7 mit einem Gelenk 63 an der vierkantigen Abkröpfung 30a des Tragarmes 30 gelagert. Zur Einstellung der Arbeitslage des Kreisels 7 dient ein an einem Gelenk 18 des Achsstummels und an dem Tragarm 30 angelenktes Spannschloß 61.

Die Funktionsweise als Hack- und Jätmaschine sei anhand der Figur 6 veranschaulicht:

Gezeigt sind hier der Einfachheit halber lediglich zwei schematisch dargestellte Arbeitswerkzeuge 2. Zwecks Bodenantrieb der Kreisel 7 wird man in der Regel acht Messer einsetzen. Die Querneigung der Kreisel 7 kann mit Hilfe des Spannschlosses 61 so eingestellt werden, daß die Arbeitswerkzeuge an der Seite der Pflanzenreihe A nicht so tief unter die Bodenlinie eindringen wie an der abgewandten Seite, sodaß hierdurch die Wurzeln der Nutzpflanzen nicht so leicht beschädigt werden können. Nach der Erfindung wird durch die den jeweiligen Anforderungen entsprechende stufenlos einstellbare Querneigung der Kreisel desweiteren ein wirkungsvoller Antrieb bei allen Feldbedingungen derselben bewirkt.

Stellt man sich die unteren Schenkel der Arbeitswerkzeuge an den oberen Schenkeln in Umlaufrichtung tangential nacheilend oder auch voreilend angeordnet vor, wobei sie tangential zu ihrer Umlaufrichtung stehen, so leuchtet ohne weiteres ein, daß hierdurch die Wurzeln der Unkrautpflanzen etwa horizontal mit ziehenden Schnitten mehrfach durchtrennt werden. Bei tangential den oberen Schenkeln nacheilender Anordnung der unteren Schenkel wird das Schnittgut zur Kreiselmitte befördert und abgestreift, so daß in der mittleren freien Zone eine Verstopfung nicht eintreten kann. Bei tangential voreilender Anordnung derselben werden diese mit Erdteilen dagegen nach außen gefördert, sodaß die beim Schnitt nicht erreichten Unkrautpflanzen mit Erde zugedeckt werden können. Durch die schräg mit ihren Schneiden zur Kreiselebene ausgerichteten oberen Schenkel werden die Wurzeln sowie über dem Boden stehenden Pflanzenteile ebenfalls mit ziehenden Schnitten etwa vertikal durchtrennt. Im Zusammenwirken der beiden Schenkel wandern bei voreilenden unteren Schenkeln die im Umlaufkreis der oberen und unteren Messer befindlichen Wurzeln und Pflanzenteile, welche nicht ganz durcht rennt sondern nur angegriffen sind, in den Eckbereich zwischen den Schenkeln und werden ausgerissen. Die Erde wird auch nicht in Bissen gespalten bzw. zersprengt sondern ebenfalls in zügigen ziehenden Schnitten fein zerkrümelt. Steine, Wurzeln sowie Pflanzen werden abgelenkt. Dieser Jäteffekt wird bei einem vorgesehenen Innenwinkel der unteren Schenkel von z.B. etwa 55° (rechts strichliniert mit 2b' angedeutet) von den oberen wesentlich verstärkt. Aber auch der Boden wird in diesen Innenwinkelbereichen beim Arbeiten in größerer Tiefe besonders fein zerkrümelt, da die Bodenteilchen an den Schenkelflächen aufwärts gleiten und hierbei gebrochen und damit besonders fein verteilt und innig vermischt werden. In vorteilhafter Weise ist bei alledem ein Selbstschärfeffekt zu verzeichnen. Der durch die Leichtzügigkeit des ziehenden Schnittes eingesparte Leistungsbedarf kommt dem Bodenantrieb, sei es dem durch die Kreisel selbst oder durch die ausgeführten Bodenantriebsräder 41 oder einer Kraftstoffeinsparung bei Fremdantrieb zugute.

Die erfindungsgemäß ausgebildeten Arbeitswerkzeuge ermöglichen so universelle Anwendungen und Leichtere Maschinenausführungen bzw. größere Arbeitsbreiten.

## Patentansprüche

1. Bodenbearbeitungsmaschine, insbesondere Hack- und Jätmaschine, mit wenigstens einem an einer vertikalen oder steil geneigten Achse oder Welle (19) angeschlossenen Kreisel (7), dessen Arbeitswerkzeuge (1,2) aus einem ersten, sich von einem Anschlußteil des Kreisels nach unten erstreckenden, im wesentlichen flachen oberen Schenkel (1a,2a) und einem zweiten, daran angeordneten, nach dem Kreiselinnern ausgerichteten, im wesentlichen flachen unteren Schenkel (1b,2b) bestehen, wobei beide Schenkel an ihrer voreilenden Kante mit einer Schneide (3) versehen sind und wobei der Innenwinkel zwischen dem ersten, oberen und zweiten, unteren Schenkel etwa 55 bis 90°, vorzugsweise 90° beträgt, wobei zur Erzeugung eines ziehenden Schnitts der erste, obere Schenkel mit seiner Schneide in Schneidrichtung zu einer senkrecht zur Kreiselachse verlaufenden Ebene schräg angestellt ist und der zweite, untere Schenkel so angeordnet ist, daß er mit seiner gedachten Verlängerung im Abstand von der Kreiselachse verläuft.

2. Bodenbearbeitungsmaschine nach Anspruch 1, dadurch gekennzeichnet, daß die Arbeitswerkzeuge (2) annähernd U-förmig ausgebildet sind, so daß ihre freiendenden Schenkel (2b) jeweils im Umschlag als Anschlußschenkel an dem Kreisel (7) dienen.

3. Bodenbearbeitungsmaschine nach Anspruch 2, dadurch gekennzeichnet, daß die Kreisel (7) eine Nabe (47) aufweisen, die mit Vierkantrohren (48) zur Aufnahme eines der freiendenden Schenkel (2b) des annähernd U-förmig ausgebildeten Arbeitswerkzeuges (2) versehen ist.

4. Bodenbearbeitungsmaschine nach Anspruch 1, dadurch gekennzeichnet, daß die Arbeitswerkzeuge annähernd L-förmig ausgebildet sind und ihre Schenkel mit mittleren Schraublöchern (6) und beidseits davon mit seitlich versetzten Schraublöchern (5) versehen sind und daß Halter (4) zum Anschrauben der Arbeitswerkzeuge vorgesehen sind.

5. Bodenbearbeitungsmaschine nach einem der vorhergehenden Anbsprüche, dadurch gekennzeichnet, daß die Arbeitswerkzeuge (1,2) zur Kreiselachse hin und nach außen verschieb- oder versetz- und feststellbar sind.

6. Bodenbearbeitungsmaschine nach einem der vorhergehenden Ansprüche, dadurch gekennzeichnet, daß der Kreisel (7) mit seiner Drehachse durch eine lös- und feststellbare oder selbsthemmende Vorrichtung (36,61) in eine quer zur Fahrtrichtung ausgerichtete Schräglage verstellbar ist.

7. Bodenbearbeitungsmaschine nach Anspruch 6, dadurch gekennzeichnet, daß der Kreisel (7) eine Scheibe (31) aufweist, die mit einem Drehlager an einem Achsstummel (33) gelagert ist, mit diesem an einem unteren Bügel einer Rohrschelle (34) befestigt ist und mit dieser Rohrschelle (34) an einem horizontal in Fahrtrichtung ausgerichteten, über einen Tragarm (30) mit einem Traggestell (21) der Maschine verbundenen Zapfen (30a) in lös- und feststellbarer Weise verdrehbar befestigt ist.

8. Bodenbearbeitungsmaschine nach Anspruch 6, dadurch gekennzeichnet, daß der Kreisel (7) eine Scheibe aufweist, die mit einem Drehlager (32) an einem Achsstummel (33) angeordnet und mit diesem an einem Gelenk (63) an einer Abkröpfung (30a) eines Tragarmes (30) der Maschine gelagert ist und zwischen dem Achsstummel (33) und dem Tragarm (30) oberhalb des Gelenks (63) ein Spannschloß (61) zur stufenlosen Verstellung der Kreiselneigung quer zur Fahrtrichtung angeordnet ist.

9. Bodenbearbeitungsmaschine nach einem der Ansprüche 1 bis 5, dadurch gekennzeichnet, daß Stützräder der Maschine vorgesehen sind, die als Bodenantriebsräder (41) ausgebildet sind und über Winkelgetriebe (43) und über Ketten (46a) oder Riemen Antriebswellen (19) antreiben und die Antriebswellen (19) an Traggestelle (21) bildenden Gelenkvierecken mittels Auslegern (44) angeschlossen sind, und daß die Naben (47) der Kreisel eine Lochreihe (50) zur Höhenverstellung aufweisen.

10. Bodenbearbeitungsmaschine nach einem der vorhergehenden Ansprüche, dadurch gekennzeichnet, daß die Maschine durch einen auf Stützrädern (16) ruhenden Querträger (10) an der Dreipunkthydraulik eines Schleppers abgestützt ist und die Arbeitslage der Arbeitswerkzeuge (1,2) in Fahrtrichtung durch Längenänderung eines an dem Querträger (10) angeordneten Oberlenkers (14) erfolgt.

## Claims

1. A soil cultivation machine, in particular a hoeing and weeding machine, having at least one rotary element (7) connected to a vertical or steeply-angled axle or shaft (19), the implements (1, 2) of said rotary element comprising a first substantially flat upper leg (1a, 2a) extending downwards from a connection piece of said rotary element and a second substantially flat lower leg (1b, 2b) arranged thereon and aligned on the interior of said rotary element, where both legs are provided with a cutting edge (3) on their leading edges and where the interior angle between said first upper and second lower legs is approximately 55° to 90°, preferably 90°, where to generate a drawing cut said first upper leg with its cutting edge is positioned obliquely in the cutting direction in relation to a plane vertical to the rotary element axis and said second lower leg is arranged such that its imaginary extension passes at a distance from said rotary element axis.

2. A soil cultivation machine according to Claim 1, characterized in that the implements (2) are designed approximately U-shaped such that their free-ending legs (2b) each serve as the connecting leg to the rotary element (7) when reversed.

3. A soil cultivation machine according to Claim 2, characterized in that the rotary elements (7) have a hub (47) provided with square-section pipes (48) for receiving one of the free-ending legs (2b) of the approximately U-shaped implement (2).

4. A soil cultivation machine according to Claim 1, characterized in that the implements are designed approximately L-shaped and their legs are provided with central screw holes (6) and with laterally offset screw holes (5) on each side of these, and in that holders (4) are provided for screwing on said implements.

5. A soil cultivation machine according to one of the preceding claims, characterized in that the implements (1, 2) are slidable or adjustable and lockable towards the rotary element axis and to the outside.

6. A soil cultivation machine according to one of the preceding claims, characterized in that the rotary element (7) is adjustable with its rotary axis into an oblique position aligned transversely to the movement direction by means of a releasable and lockable or self-locking device (36, 61).

7. A soil cultivation machine according to Claim 6, characterized in that the rotary element (7) has a disk (31) mounted with a pivot bearing on a stub axle (33), is attached to said stub axle by a lower bracket of a pipe clip (34) and is attached rotatably in a releasable and lockable manner using said pipe clip (34) to a journal (30a) aligned horizontally in the movement direction and connected by a support arm (30) to a support frame (21) of the machine.

8. A soil cultivation machine according to Claim 6, characterized in that the rotary element (7) has a disk arranged with a pivot bearing (32) on a stub axle (33) and mounted therewith by a joint (63) on a bend (30a) of a support arm (30) of the machine and in that between said stub axle (33) and said support arm (30) above said joint (63) a turnbuckle (61) is arranged for infinite adjustment of the rotary element inclination transverse to the movement direction.

9. A soil cultivation machine according to one of Claims 1 to 5, characterized in that stabilizing wheels of the machine are provided which are designed as ground driving wheels (41) and which power drive shafts (19) via angle gears (43) and via chains (46a) or belts, in that said drive shafts (19) are connected by means of arms (44) to four-bar linkages forming support frames (21), and in that the hubs (47) of the rotary elements have a row of holes (50) for height adjustment.

10. A soil cultivation machine according to one of the preceding claims, characterized in that the machine is supported on the three-point hydraulic system of a tractor by a transverse bar (10) resting on stabilizing wheels (16) and that the working positions of the implements (1, 2) are achieved in the movement direction by altering the length of an upper link (14) arranged on said transverse bar (10).

## Revendications

1. Machine pour le travail du sol, en particulier machine de binage et de sarclage, avec au moins un élément rotatif (7) rattaché à un axe ou à un arbre (19) vertical ou à forte inclinaison, dont les outils de travail (1,2) sont composés d'un premier montant supérieur (1a,2a) essentiellement plat s'étendant vers le bas à partir d'une pièce de jonction de l'élément rotatif, et d'un deuxième montant inférieur essentiellement plat (1b,2b), placé à sa suite, orienté vers l'intérieur de l'élément rotatif, les deux montants étant équipés d'une lame (3) sur leur arête d'avance, l'angle interne entre le premier montant supérieur et le deuxième montant inférieur étant environ de 55 à 90°, de préférence de 90°, le premier montant supérieur avec sa lame dans le sens de la coupe étant placé, pour produire une coupe effectuée par traction, en oblique par rapport à un plan vertical par rapport à l'axe de l'élément rotatif, et le deuxième montant inférieur étant placé de façon à être, par sa prolongation imaginaire, à distance de l'axe de l'élément rotatif.

2. Machine pour le travail du sol selon la revendication 1, caractérisée en ce que les outils de travail (2) ont approximativement une forme en U, de sorte que leurs montants (2b) aux extrémités libres servent chacun, au niveau du rabattement, de montant de jonction à l'élément rotatif (7).

3. Machine pour le travail du sol selon la revendication 2, caractérisée en ce que les éléments rotatifs (7) ont un moyeu (47) équipé de tubes carrés (48) pour accueillir l'un des montants à extrémité libre (2b) de l'outil de travail (2) approximativement formé en U.

4. Machine pour le travail du sol selon la revendication 1, caractérisée en ce que les outils de travail ont approximativement une forme en L et en ce que leurs montants sont équipés de percements médians pour vis (6), et de part et d'autre de ces derniers de percements latéraux pour vis (5), et en ce que des supports sont prévus (4) pour visser les outils de travail.

5. Machine pour le travail du sol selon l'une des revendications précédentes, caractérisée en ce que les outils de travail (1,2) peuvent être décalés ou déplacés et bloqués en direction de l'axe de l'élément rotatif et dans l'autre sens.

6. Machine pour le travail du sol selon l'une des revendications précédentes, caractérisée en ce que l'élément rotatif (7) avec son axe de rotation peut être réglé au moyen d'un dispositif de desserrage et de blocage ou d'un dispositif autobloquant (36,61) sur une position inclinée transversalement par rapport au sens de la marche.

7. Machine pour le travail du sol selon la revendication 6, caractérisée en ce que l'élément rotatif (7) présente un disque (31) logé par un palier de pivotement sur une fusée d'essieu (33), fixé à celle-ci avec la bride inférieure d'un collier de tuyau (34) et fixé à ce collier de tuyau (34) par un tourillon (30a) relié à un cadre porteur (21) de la machine par un bras de support (30) placé à l'horizontale dans le sens de la marche.

8. Machine pour le travail du sol selon la revendication 6, caractérisée en ce que l'élément rotatif (7) présente un disque placé au moyen d'un palier de pivotement sur une fusée d'essieu (33) et logé avec cette dernière contre une articulation (63) sur un coude (30a) d'un bras de support (30) de la machine, et en ce qu'un manchon de serrage (61) entre la fusée d'essieu (33) et le bras de support (30) est placé au-dessus de l'articulation (63) pour le réglage en continu de l'inclinaison de l'élément rotatif transversalement par rapport au sens de la marche.

9. Machine pour le travail du sol selon l'une des revendications 1 à 5, caractérisée en ce que sont prévues des roues d'appui pour la machine, qui sont conçues comme roues motrices (41), qui entraînent au moyen d'engrenages coniques (43) et de chaînes (46a) ou de courroies des arbres de transmission (19) et qui sont raccordées aux arbres de transmission (19) par des quadrilatères articulés formant des cadres porteurs (21) au moyen de bras (44), et en ce que les moyeux (47) de l'élément rotatif présentent une série de perforations (50) pour le réglage de la hauteur.

10. Machine pour le travail du sol selon l'une des revendications précédentes, caractérisée en ce que la machine repose sur le système hydraulique à trois points d'un tracteur au moyen d'une barre transversale (10) reposant sur des roues d'appui (16), et en ce que la position de travail des outils de travail (1,2) dans le sens de la marche est obtenue par modification de la longueur d'un bras oscillant supérieur (14) placé sur la barre transversale (10).
